**Europäisches Patentamt**

**European Patent Office**

**Office européen des brevets**

(19)

(11) Numéro de publication: **0 120 170**
**A2**

# (12) DEMANDE DE BREVET EUROPEEN

(21) Numéro de dépôt: **83402243.6**

(22) Date de dépôt: **22.11.83**

(51) Int. Cl.³: **B 26 D 7/01**

(30) Priorité: **25.11.82 FR 8219744**

(43) Date de publication de la demande:
**03.10.84 Bulletin 84/40**

(84) Etats contractants désignés:
**AT BE CH DE GB IT LI LU NL SE**

(71) Demandeur: **Ferrier, Christian**
**Lou Cayre Saut de Millo**
**F-06730 Saint Andre(FR)**

(72) Inventeur: **Ferrier, Christian**
**Lou Cayre Saut de Millo**
**F-06730 Saint Andre(FR)**

(74) Mandataire: **Hautier, Jean-Louis**
**OFFICE MEDITERRANEEN DE BREVETS D'INVENTION 24**
**rue Masséna**
**F-06000 Nice(FR)**

(54) Appareil pour la fabrication des brochettes alimentaires.

(57) L'invention a pour objet un appareil pour la préparation, le découpage calibré et l'embrochage de brochette alimentaires.

L'appareil est composé de quatre côtés (8) dont au moins un des côtés est amovible de manière à permettre un chargement des aliments par le côté. Le réglage de la hauteur de la brochette en aliments se fait par le bas de l'appareil au moyen d'une planche de découpage (13). Le bloc de guidage (18) par sa collerette (19) permet d'obtenir toujours que les aliments soient bien pressés entre deux plans parallèles (18 et 13), le centrage et l'embrochage des brochettes est dont parfait.

EP 0 120 170 A2

./...

Fig. 7

Appareil manuel pour la préparation, le découpage calibré et l'embrochage de brochettes alimentaires, à chargement par le côté et au réglage par le fond.

La présente invention a pour objet un appareil manuel de petite et moyenne capacité, pour la préparation, le découpage calibré et l'embrochage de brochettes de viandes et/ou de légumes, et/ou de volailles, et/ou de poissons, et/ou de fruits de mer, et/ou de fruits, et/ou la préparation et le découpage calibré de la viande pour la fondue bourguignonne.

Les appareils actuels sont des appareils industriels créés pour préparer en une seule fois plus d'une centaine de brochettes; ces appareils sont donc lourds, difficiles à utiliser pour un non profesionnel et d'un entretien fastidieux.

Ces appareils se remplissent d'aliments (viandes, légumes, poissons, etc...) généralement par le haut et le réglage de la longueur d'aliments embrochés sur la brochette se fait également par le haut.

Le brevet français DOLE n° 2.494.092 décrit en particulier une machine dont la particularité réside dans le fait que le découpage des aliments se fait automatiquement par un mécanisme de découpage formé d'une pluralité de lames coupantes 26 alignées sur un support de couteau 25 accouplé à un moteur 35.

Le brevet U.S. PANARITIS n° 4,056,026 décrit un appareil à un usage industriel où la découpe se fait manuellement, il décrit en particulier des moyens techniques pour empiler les aliments par le haut et pour les compresser entre eux. Le chargement de l'appareil en aliments se fait par le haut de l'appareil.

Le brevet français ROBA n° 2.426.414 décrit des caractéristiques techniques identiques ou analogues aux caractéristiques techniques du brevet américain PANARITIS n° 4,056,026; il décrit un outil associé au support de broches et servant à la mise en place desdites broches dans le bâti et un élément de couplage faisant office de poignée auxiliaire et qui peut se fixer au voisinage de la pointe de la broche.L'invention se distingue de ces brevets dans la mesure où l'appareil est en piorité à usage domestique. Il peut permettre de réaliser une douzaine de brochettes. Il comporte une paroi latérale amovible qui s'ouvre, ou s'enlève complètement, et qui permet ainsi de charger l'appareil par le côté et non par le haut. De même le réglage de la longueur de broche à garnir se fait par le bas de l'appareil.

A cet effet, l'appareil selon l'invention peut comporter un bac ou magasin de rangement composé de quatre panneaux démontables, ou de trois côtés monobloc et d'un côté démontable et/ou monté sur charnière. Un des côtés dudit bac reste amovible. Des moyens de fixation adaptés selon un des deux modes de réalisation permettent de fixer ledit bac sur son socle. Ledit socle peut comporter également des moyens de récupération du jus (rigole ou canal muni d'un bec déverseur).

Dans le cas où les broches sont métalliques, il peut être utile que celles-ci comportent, à l'extrémité opposée de la pointe, un oeillet pour le maintien et la manipulation. Dans ce cas le bloc de guidage supérieur comporte, au niveau des trous de guidage, non seulement un trou cylindrique pour le corps de la broche, mais une ou plusieurs fentes permettant le passage de l'oeillet de ladite broche.

Les dessins ci-joints permettront aisément de comprendre l'invention, ils représentent un des modes de réalisation selon l'invention.

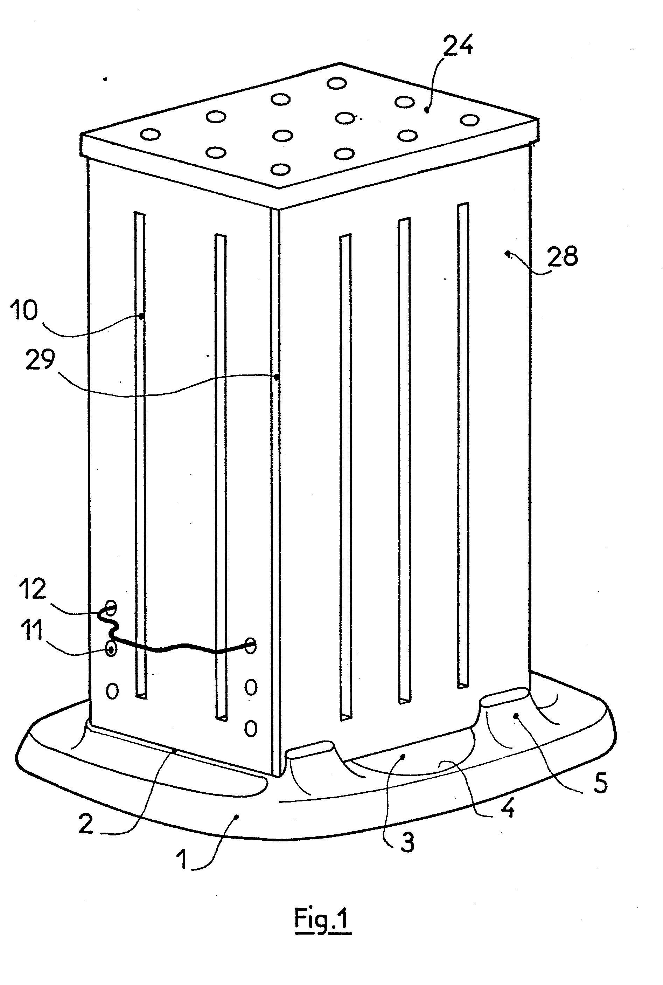

La figure 1 est une vue en perspective, vue de dessus, de l'appareil monté.

La figure 2 est une vue du socle vue en perspective.

La figure 3 est une vue en perspective, vue de dessus, du bac ouvert avec, à l'intérieur, la planche de découpage et sa tige de blocage amovible.

La figure 4 est une vue de la planche de découpage vue en coupe longitudinale.

La figure 5 est une vue du bloc de guidage supérieur 18 en coupe longitudinale.

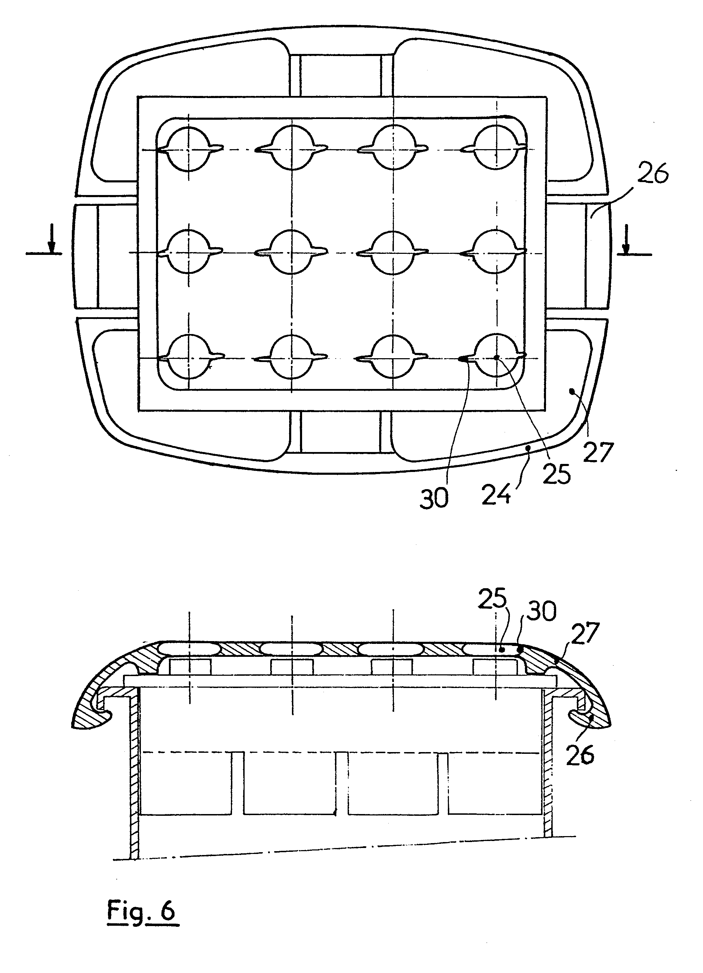

La figure 6 est une vue du couvercle supérieur vue en perspective.

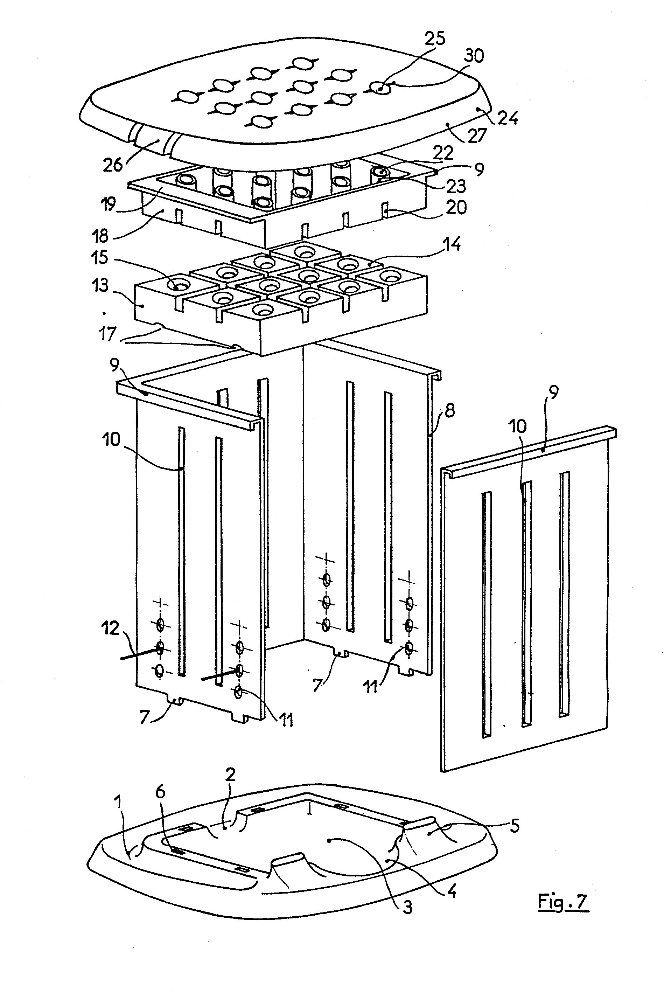

La figure 7 est une vue éclatée des différentes pièces composant l'appareil.

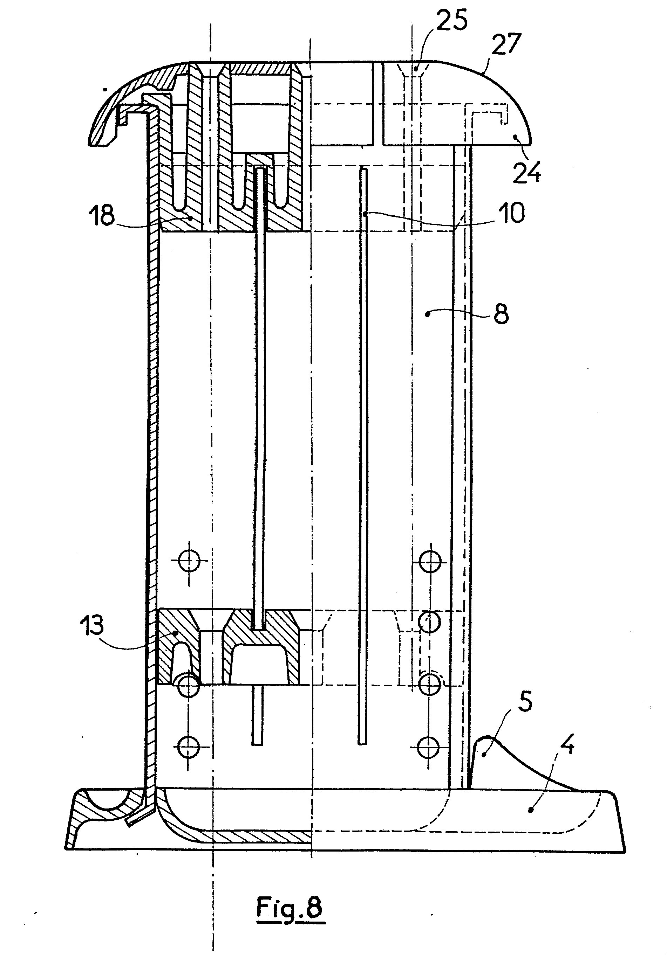

La figure 8 est une vue en coupe longitudinale de l'appareil.

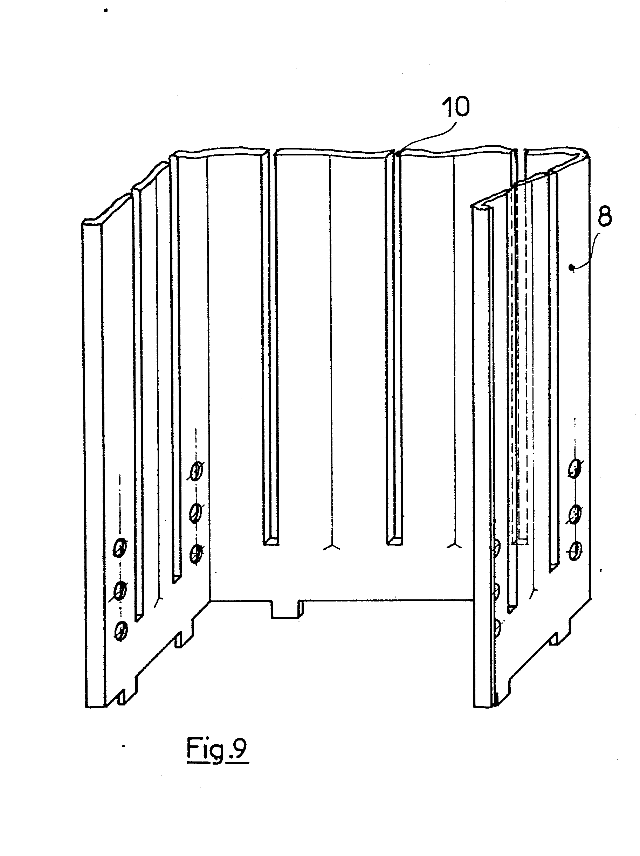

La figure 9 est une vue en perspective dans le cas où l'appareil se compose de trois côtés monobloc.

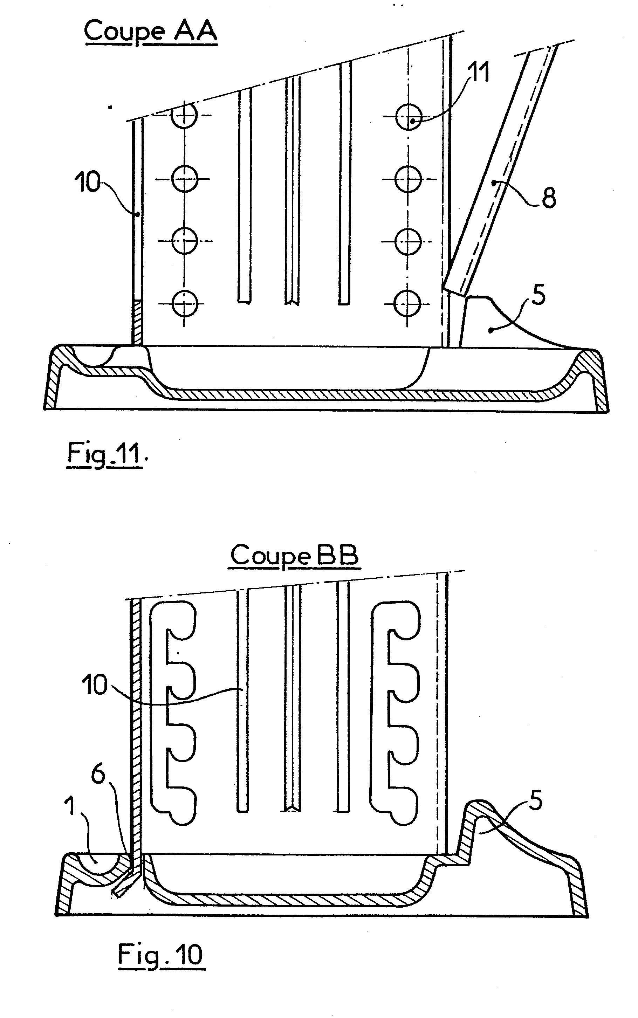

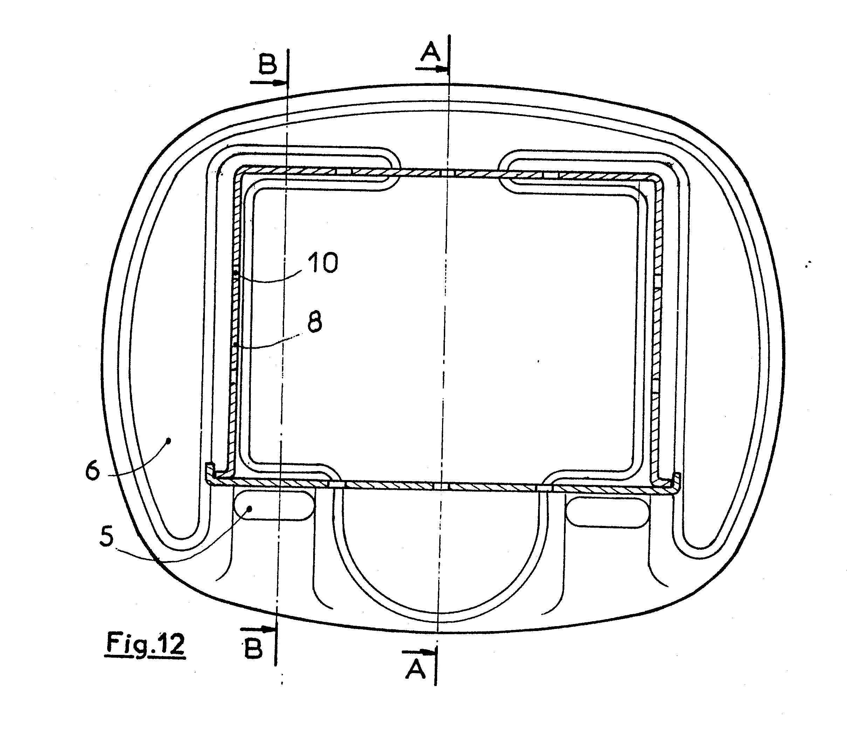

La figure 10 est une vue en coupe longitudinale selon l'axe B-B représenté à la figure 12.

La figure 11 est une vue longitudinale selon l'axe A-A représenté à la figure 12.

La figure 12 est une vue de l'appareil vue de dessus sans couvercle, sans bloc de guidage ni planche de découpage.

L'appareil comprend les éléments suivants :
- un socle 1,
- un bac de rangement de victuailles choisies 28 dont au moins une des parois est amovible,
- une planche de découpage 13,
- le bloc de guidage supérieur 18,
- un couvercle 24,
- une tige en U de blocage 12 ou base inférieure, ou planche de découpage 13,
- une broche à un ou plusieurs pics de pré-perforation des trous permettant à l'embrochage des broches définitives, ou dites d'utilisation, ceci seulement dans le cas où l'on utiliserait des broches en bois blanc ou en bambou.

Les matériaux employés à la fabrication peuvent être soit des plastiques alimentaires et appropriés pour chacune des parties de l'appareil, soit en acier inoxidable alimentaire.

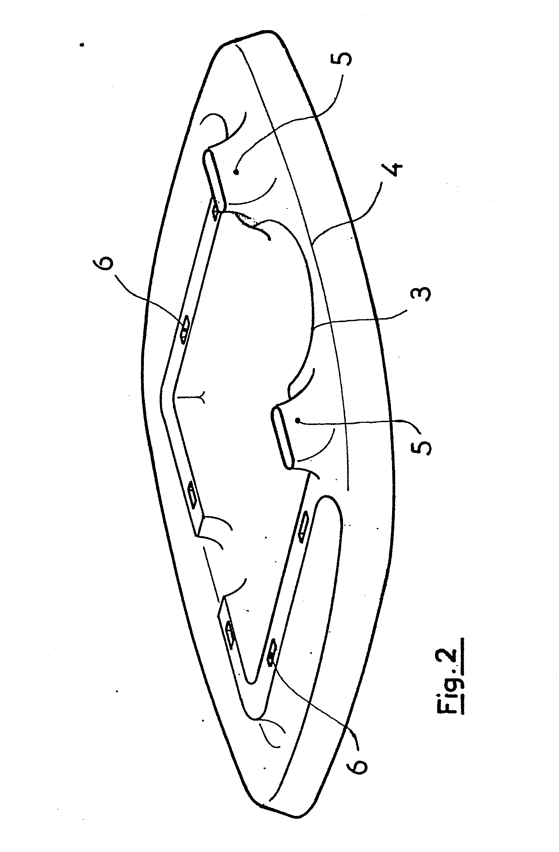

Le socle 1, figure 2, est dans sa partie centrale 2 à l'extérieur de la périphérie du bac de rangement des victuailles choisies 28, concave et se prolonge vers l'extérieur dudit socle 1, à un point donné, par un canal également concave 3 qui se termine par un bec verseur 4. Cette

- 4 -

0120170

forme a été retenue par le fait que les viandes, au moment de leur manipulation, laissent échapper une certaine quantité de sang. Celui-ci ruisselle le long des parois 8 dudit magasin de rangement, ou bac, et vient entacher la table de travail. Ce procédé permet à l'utilisateur de récupérer le sang et, soit de le jeter, soit de l'utiliser puisque propre. Dans le cas de fruits, cela permet également à l'utilisateur de récupérer un jus de fruits propre à la consommation.

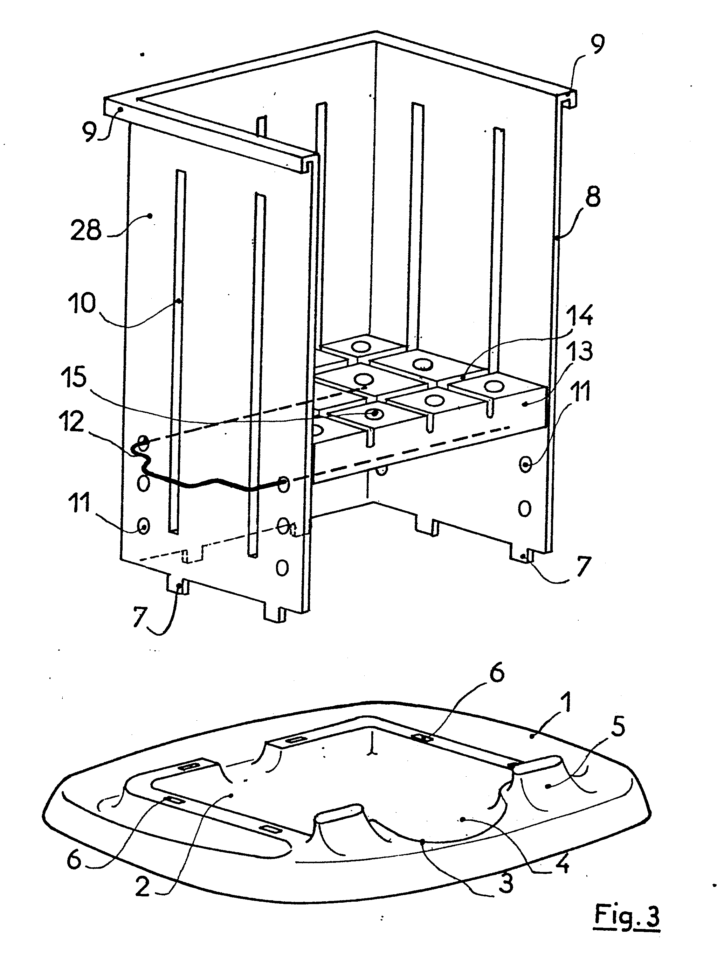

Le bac 28, figure 3, est, ou peut être, démontable, selon qu'il soit de petite ou moyenne capacité, et selon qu'il sert la ménagère ou le professionnel. Il est, ou peut être, fait de quatre panneaux démontables, ou de trois côtés monobloc et d'un côté démontable.

Dans les deux modes de réalisation un côté reste toujours amovible; il sert, une fois retiré, à permettre par l'ouverture laissée béante le chargement de l'appareil.

Les quatre côtés 8 ont dans le sens de leur hauteur et en parallèle des fentes, nervurés, de manière à les rendre plus rigides.

De la rigidité des côtés 8 dépend la bonne coupe des morceaux à couper. Les nervures évitent également au moment de la pression exercée sur le bloc de guidage 18 le gonflement des parois qui risque de destabiliser le rangement effectué auparavant. Chacun des côtés 8 est pourvu de fentes verticales 10 dont le nombre est fonction de la capacité dudit appareil. Leur espacement peut différer selon si l'on veut obtenir des brochettes carrées ou rectangulaires. La largeur des fentes 10 est, par exemple, de deux millimètres et demi, elle est étudiée pour le passage d'une lame de couteau de cuisine, de dimension suffisante pour passer de part en part des côtés 8 sens longueur dudit appareil, et permettre ainsi le découpage des victuailles choisies et emmagasinées. La longueur des fentes 10 est fonction de la hauteur desdites parois dudit appareil.

Dans le cas où les côtés 8 dudit appareil sont démontables, ils sont alors, pour leur fixation sur le socle 1, emboités dans des boutonnières 6 prévues à cet effet et dans lesquelles viennent se loger des ergots 7 se trouvant à la base de chacun des trois côtés 8 montables avant le remplissage dudit bac 28. Le quatrième côté 8 qui, lui, est toujours amovible dans les deux cas, ne comporte rien à sa base; il est maintenu à sa base sur ledit socle 1 par deux excroissances 5 situées à un point donné de chaque côté dudit canal 3 et servant de butées, son guidage ou centrage se fait à l'aide des ailerons 29 rabattus sur ses côtés extérieurs dans le sens de sa hauteur, les trois côtés 8 montés auparavant sur le socle 1 par les fentes 6 et les ergots 7 sont maintenus entre eux par des points de fixation soit en s'embrochant les uns dans les autres, soit par des ergots placés sur la couronne 9.

Dans le mode de réalisation dont les trois côtés sont monobloc, lesdits côtés 8 du bac 28, s'ils sont en plastique alimentaire, des ergots 7 se trouvant à leur base, viennent se clipser sur le socle 1 dans les orifices 6 prévus à cet effet. Si, au contraire, ils sont en inox, ils ont à leur base, figure 3, des ergots 7 que l'on introduit dans les boutonnières 6 destinées à les recevoir sur ledit socle 1. Ils sont, par la suite, rabattus dans un sens, telles des agrafes, jusqu'à ce qu'ils maintiennent le bac monobloc 28 solidement amarré audit socle 1.

Les quatre côtés 8 dudit bac 28 forment sur leur périphérie supérieure une couronne 9 en forme de cornière qui sert à donner de la rigidité auxdits côtés 8 et sert, également au bloc de guidage 18 de support et de butée pour sa collerette 19.

La couronne 9 sert également au couvercle 24 à maintenir lesdits quatre côtés 8 fermement solidaires.Ladite couronne 9 permet,également, au couvercle 24 de maintenir ledit bloc de guidage 18 en place et sous pression constante, mais pas incontrôlée, grâce à la collerette 19 dudit bloc de guidage 18 et cela au moyen de clips 26 qui viennent s'y amarrer.

Sur les côtés 8 formant ledit bac 28 dans le sens de la largeur de l'appareil ou petit côté, se trouvent en partant de la base desdits côtés 8 vers le haut, à quelques millimètres dudit socle 1 et situées dans l'axe des deux bandes formant les extrémités desdits côtés 8 sur une hauteur donnée pour atteindre environ cinq niveaux de paliers, des trous 11 à distances régulières pour permettre à la planche de découpage 13 par l'intermédiaire de la tige de blocage amovible 12 de réduire ou d'augmenter le volume dudit bac de rangement 28.

0120170

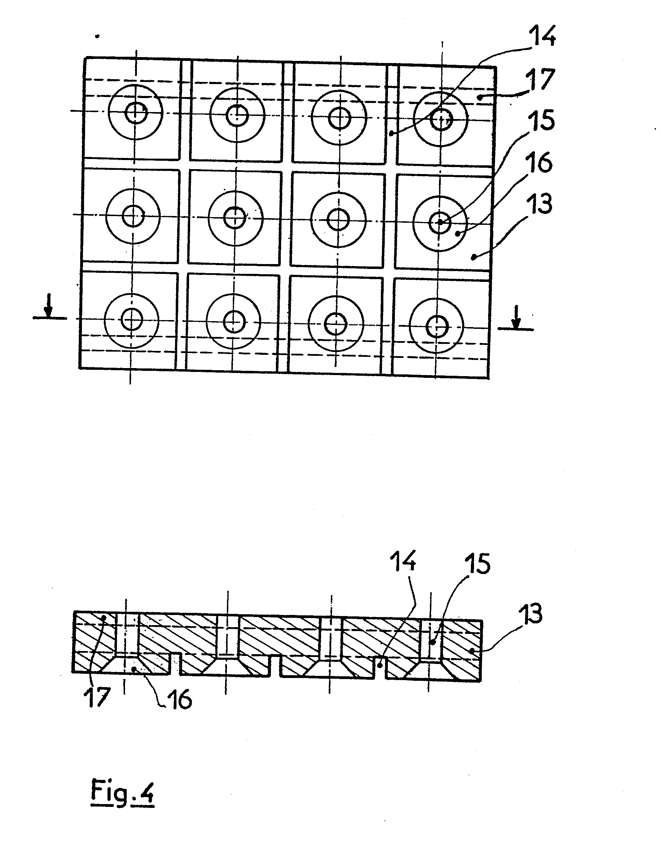

La planche de découpage 13, figure 4, correspond à la surface intérieure formée par la périphérie interne dudit bac 28 sa hauteur est de 15 m/m environ; elle est de préférence en nylon, en polycarbonate ou polypropylène alimentaire. La planche de découpage 13 est maintenue à la hauteur désirée par la tige de blocage amovible 12.

Ses fonctions sont au nombre de deux, et se définissent ainsi : la première fonction est de permettre sa mobilité, de réduire ou d'augmenter la partie comestible des brochettes, c'est-à-dire à agrandir ou à réduire le volume de viande ou autres victuailles dudit bac de rangement 28.

La planche de découpage 13 peut avoir, au moins, cinq niveaux de paliers différents par simple déplacement de ladite tige de blocage amovible 12 le long des trous 11, ceci dans le cas où l'on désire réduire la hauteur de la brochette de fruits, ou au contraire, si l'on désire faire des brochettes de viande, l'augmenter, ces deux hypothèses sont données à titre indicatif.

Ladite planche de découpage 13 a pour fonction seconde de servir de support de base et de planche de découpage des victuailles, en rapport étroit avec les fentes 10 des côtés 8 dudit bac de rangement 28 et leurs espacements.

Un exemple concret permet de comprendre l'invention. Ainsi dans le cas bien précis de la brochette de viande carrée, les fentes 10 sont espacées de 25 m/m sur les quatre côtés 8 dudit bac 28.

Ladite planche de découpage 13 est faite également sur sa partie ou face supérieure de carrés de 25 m/m de côté, lesdits carrés sont délimités par des fentes perpendiculaires 14, d'une longueur égale à celles des côtés 8 dudit bac 28, soit deux millimètres et demi, et d'une profondeur de 5 m/m, de manière à permettre au couteau de bien couper la viande et d'être sûr qu'il ne puisse y avoir un filament de ladite viande qui puisse relier deux morceaux de base entre euxAu centre de chaque carré, formé par les fentes 14 de ladite planche de découpage 13 un trou 15 perce ladite planche de découpage 13 de part en part, de façon à permettre à la broche de pré-perforation, ou à la broche dite d'utilisation, de bien pénétrer dans la viande et de

0120170

dépasser le dernier morceau de base d'au moins quelques centimètres.

Chaque trou 15 de la planche de découpage 13 a sur la partie supérieure de ladite planche de découpage 13 un élargissement ou fraisage en forme d'entonnoir 16 dudit trou 15, ceci de manière à permettre à la broche au moment de transpercer le morceau de base de bien se centrer, et de pénétrer sans difficulté dans le trou 15.

Sur la face inférieure de ladite planche de découpage 13, dans le sens de la longueur, deux sillons de guidage 17 servent à la tige de blocage amovible 12 de bien se diriger lors d'un décalage de ladite planche de découpage 13 pour pénétrer dans les trous 11, sans difficulté. Lesdits sillons 17 servent également à stabiliser ladite planche de découpage 13 au moment du chargement des victuailles dans le bac 28. Ce blocage permet à l'utilisateur, s'il le désire, de manipuler ladite planche de découpage 13 avec son support de blocage 12 une fois le bac 28 chargé, et cela sans déséquilibrer ou déranger les victuailles empilées dans ledit bac 28.

L'invention a pour objet une tige en forme de U, appelée tige de blocage amovible 12 de la planche de découpage 13, figure 3; elle est confectionnée en inox ou en métal chromé, de longueur suffisante pour que ses deux bouts puissent passer de part en part de l'appareil dans le sens de la longueur et venir se fixer au point désiré d'ancrage, prévu sur les côtés 8 dudit bac 28.

Son utilisation est décrite ci-dessus.

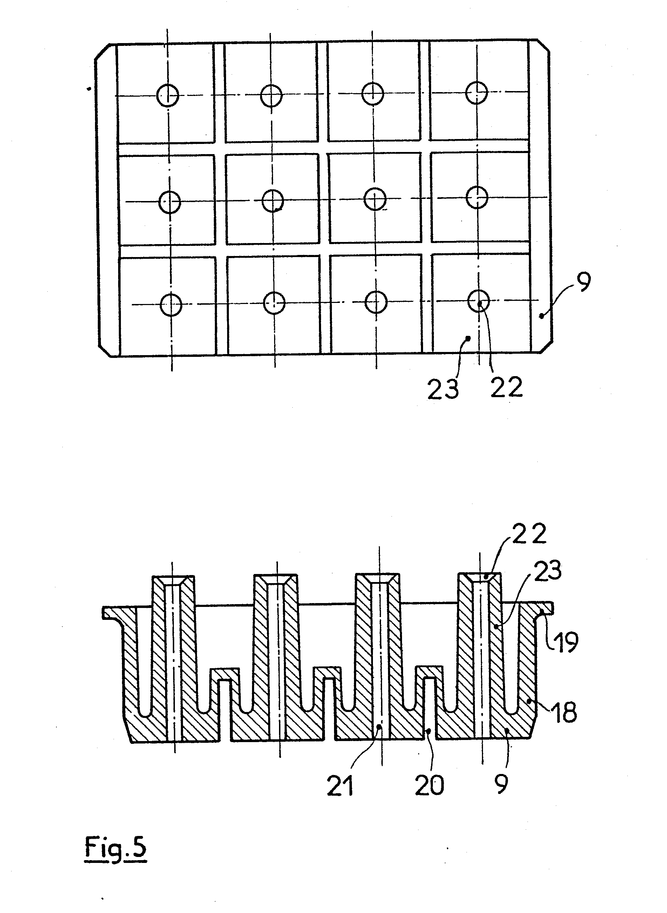

Le guide-broche et couteau, ou bloc de guidage, ou base supérieure, ou bloc de guidage 18, figure 5, est, ou peut être, fait dans les mêmes matériaux que ceux utilisés pour ladite planche de découpage 13. Comme son nom l'indique, le bloc de guidage 18 a des fonctions bien définis. La première de ses fonctions est de presser, une fois le bac 28 chargé et fermé de ses quatre côtés 8, les victuailles choisies pour les brochettes, de manière à empêcher les différentes couches de denrées comestibles et diverses de bouger ou de glisser, ledit bloc de guidage 18 compresse lesdites victuailles pour n'en faire qu'un bloc homogène. La seconde fonction dudit bloc de guidage 18 est de servir de guide aux couteaux par l'intermédiaire de ses fentes 20 identiques quant à leurs espaceements et leurs largeurs à celles de ladite planche de découpage 13, mais de profondeur plus importante environ 15 m/m, de cette manière le couteau peut bien passer dans les fentes 10 pour se disposer sur les victuailles à couper, de part en part dudit bac 28 par les fentes 10 correspondantes. Cela permet une coupe parfaite et sans effort. La troisième fonction dudit bloc de guidage 18 est de guider au départ et sur 40 m/m les broches par l'intermédiaire des trous 21 avec leur fraisage 22 identiques quant à leur diamètre et conception à ceux de ladite planche de découpage 13.

Seule l'épaisseur, ou hauteur, dudit bloc de guidage 18 ainsi que sa forme sont différentes de ladite planche de découpage 13 qui a pour sa part 20 m/m d'apaisseur environ.

La face supérieure dudit bloc de guidage 18 comporte à l'emplacement desdits trous de guidage de broches 22 et 21 des excroissances cylindriques 23 que nous appellerons cheminées, leur hauteur en prenant pour base la face supérieure dudit bloc de guidage 18 est de 10 m/m environ.

Lesdites cheminées 23 servent à guider le couvercle 24. La périphérie dudit bloc de guidage 18 est représentée par la collerette 19, figure 5, qui a épousé la forme périphérique dudit bac 28 et de sa couronne 9.

Ladite collerette 19 a pour objet de servir de butée audit bloc de guidage 18, de façon à éviter l'écrasement des victuailles dans le bac 28.

Le corps dudit bloc de guidage 18 est de forme et de superficie identiques à ladite planche de découpage 13.

L'invention a pour objet le couvercle 24, ledit couvercle 24 peut être fait en matière plastique ou en inox, il peut, ou pas, avoir dans sa face interne une périphérie de forme identique à celle dudit bloc de guidage 18 et donc du même fait une forme identique à la périphérie supérieure dudit bac 28 et de sa couronne 9. Sa forme externe peut être différente pour des questions d'esthétique et de dessin.

Ledit couvercle 24 comporte à ses deux extrémités, côté largeur, des clips 26.

Lesdits clips 26 peuvent soit s'emboiter dans un logement prévu à cet effet sur le couvercle 24, soit lesdits clips 26 font partie intégrante du couvercle 24 ce qui sous-entend un couvercle 24 et ses clips 26 entièrement moulés ou injectés dans la même matière.

Lesdits clips 26 permettent à l'utilisateur par une simple pression sur ledit couvercle 24 de vérouiller tout le système comprenant ledit bloc de guidage 18 le couvercle 24 ainsi que le côté 8 amovible dudit bac 28, ce qui permet à l'utilisateur d'entamer les opérations d'embrochage et de coupe.

Ledit couvercle 24 a pour objet la maintenance des quatre côtés 8 dudit bac 28 entre eux, non pour les amarrer, mais pour les renforcer et éviter un risque d'écartement desdits côtés 8 au moment de la poussée occasionnée sur ledit bloc de guidage 18. Il sert également à maintenir ledit bloc de guidage 18 en place donc sous pression.

Dans le cas du bac 28 composé de trois côtés 8 monobloc, le couvercle 24 sert également à fixer le quatrième côté 8 amovible.

La broche de pré-perforation a un ou plusieurs pics est, soit en inox, soit en métal chromé.

Pour utiliser l'appareil manuel à trois côtés 8 monobloc pour la préparation, le découpage calibré et l'embrochage des brochettes de viandes, il suffit de :
- retirer le couvercle 24, le bloc de guidage 18 et le côté amovible 8 qui sert de porte de remplissage. Il faut régler la hauteur de la planche de découpage 13 par l'intermédiaire du support de blocage amovible 12, puis empiler la viande, les abats, les légumes, par rangées superposées dans le bac 28 jusqu'à 15 m/m de la gueule dudit appareil, puis de remettre le côté 8 amovible, d'y ajouter le bloc de guidage 18, puis le couvercle 24 et de vérouiller,
- prendre la broche en inox faire la pré-perforation trou 21 par trou 21 et après chaque pré-perforation, introduire la broche dite d'utilisation, prendre le couteau, l'enfiler dans les fentes 10 à hauteur dudit bloc de guidage 18, le passer de part en part et couper de haut en bas ainsi de suite dans les cinq fentes 10.

L'opération terminée, enlever le couvercle 24, retirer le bloc de guidage 18 puis le côté amovible dudit bac 28 et retirer les douze brochettes prêtes à aller sur le grill.

Dans le cas où les broches sont métalliques, il peut être utile que celles-ci comportent, à l'extrémité opposée de la pointe, un oeillet pour le maintien et la manipulation. Dans ce cas le bloc de guidage supérieur comporte, au niveau des trous de guidage, non seulement un trou cylindrique pour le corps de la broche, mais une ou plusieurs fentes 30 permettant le passage de l'oeillet de ladite broche.

La planche de découpage 13 peut, sur la figure 14, être déplacée et réglée sans avoir besoin pour cela de la tige de blocage 12 qui, dans ce mode de réalisation, est retirée. Pour régler la hauteur du bac 28 il suffit de retirer entièrement la planche à découper 13 et de l'emboiter sur les glissières ou cornières prévues à cet effet à différents niveaux. Pour ce faire, les deux côtés 8 dudit bac 28 comportant les ailerons 29 se trouvant flanqué en lieu et place des trous 11 ou même sur toute la largeur dudit côté 8 des glissières ou cornières formées soit par emboutissage soit par découpage desdits côtés 8. Ces glissières ou cornières ne sont pas représentées sur les figures.

L'innovation réside dans le fait que le bloc de guidage 18, par sa collerette servant de butée 19, permet d'avoir une position parfaitement perpendiculaire aux planches de découpage 13 et de se trouver ainsi parfaitement allignées sur les côtés 8 dudit bac 28, ce qui permet ainsi d'obtenir deux plans de coupe parallèle et ce, contrairement aux appareils actuels. Ls appareils actuels comportent un couvercle qui vient presser par le haut les aliments, ledit couvercle ne se trouve donc pas toujours parallèle à la base. Les aliments ne sont donc pas bien disposés perpendiculairement aux blocs de guidage, donc les broches sont mal disposées sur les aliments. L'invention évite tous ces inconvénients du fait que les deux plans de coupe sont parallèles. Le centrage des broches se fait automatiquement dans les pièces ou morceaux d'aliments.

Revendications

1. Appareil manuel pour la préparation, le découpage calibré et l'embrochage de brochettes alimentaires caractérisé par le fait qu'il comporte au moins un côté amovile qui permet le chargement latéral du bac de rangement (28), des moyens de blocage (12) amovibles permettent de régler le volume dudit bac de rangement par le bas.

2. Appareil manuel pour la préparation, le découpage calibré et l'embrochage de brochettes alimentaires selon la revendication 1 caractérisé par le fait que le bac de rangement (28) est composé de quatre côtés (8) ou panneaux démontables ou de trois côté monobloc et au moins d'un côté démontable ou monté sur charnière, l'ensemble est maintenu par des moyens de fixation boutonnière (6), ergots (7), excroissances (5), ailerons (29)).

3. Appareil manuel pour la préparation, le découpage calibré et l'embrochage de brochettes alimentaires selon l'une quelconque des revendications 1 ou 2 caractérisé par le fait que les quatre côtés (8) ont dans le sens de leur hauteur et en parallèle des fentes, des nervures, de manière à les rendre plus rigides, de la rigidité des côtés (8) dépend la bonne coupe des morceaux à couper, les nervures évitent également au moment de la pression exercée sur le bloc de guidage (18) le gonflement des côtés qui risque de destabiliser le rangement effectué auparavant, chacun des côtés (8) est pourvu de fentes verticales (10) dont le nombre est fonction de la capacité dudit appareil.

4. Appareil manuel pour la préparation, le découpage calibré et l'embrochage de brochettes alimentaires selon l'une quelconque des revendications 1, 2 ou 3 caractérisé par le fait que les quatre côtés (8) dudit bac (28) forment sur leur périphérie supérieure une couronne (9) en forme de cornière qui sert à donner de la rigidité auxdits côtés (8) et sert, également, au bloc de guidage (18) de support et de butée pour sa collerette (19).

5. Appareil manuel pour la préparation, le découpage calibré et l'embrochage de brochettes alimentaires selon l'une quelconque des revendications 1, 2, 3 ou 4 caractérisé par le fait que la courronne (9) sert également au couvercle (24) à maintenir lesdits quatre côtés (8) fermement solidaires, ladite couronne (9) permet, également, au couvercle (24) de maintenir ledit bloc de guidage (18) en place et sous pression constante, grâce à la collerette (19) dudit bloc de guidage (18) et cela au moyen de clips (26) qui viennent s'y amarrer.

6. Appareil manuel pour la préparation, le découpage calibré et l'embrochage de brochettes alimentaires selon l'une quelconque des revendications 1, 2, 3, 4 ou 5 caractérisé par le fait qu'il comportent une planche de découpage (13) qui correspond à la surface intérieure formée par la périphérie interne dudit bac (28) ladite planche de découpage (13) est maintenue à hauteur désirée par la tige de blocage amovible (12).

7. Appareil manuel pour la préparation, le découpage calibré et l'embrochage de brochettes alimentaires selon l'une quelconque des revendications 1, 2, 3, 4, 5 ou 6 caractérisé par le fait que la planche de découpage (13) a une première fonction qui permet de régler par le bas le volume de la charge alimentaire qui est disposée dans le bac de rangement (28) et une seconde fonction pour servir de support de base et de planche de découpage des aliments en rapport étroit avec les fentes (10) des côtés (8) dudit bac de rangement (28) et leurs espacements.

8. Appareil manuel pour la préparation, le découpage calibré et l'embrochage de brochettes alimentaires selon l'une quelconque des revendications 2, 6 ou 7, caractérisé par le fait que ladite planche de découpage (13) est faite également sur sa partie supérieure de carrés, lesdits carrés sont délimités par des fentes perpendiculaires (14) d'une largeur égale à celles des côtés (8) dudit bac (28) et d'une profondeur adéquat, de manière à permettre au couteau de bien couper la viande et d'être sûr qu'il ne puisse y avoir un filament de ladite viande qui puisse relier deux morceaux de base entre eux, au centre de chaque carré, formé par les fentes (14) de ladite planche de· découpage (13) un trou (15) perce ladite planche de découpage (13) de part en part, de façon à permettre à la broche de pré-perforation, ou à la broche dite d'utilisation, de bien pénétrer dans la viande et de dépasser le dernier morceau de base d'au moins quelques centimètres,chaque trou (15) de la planche de découpage (13) a sur la partie supérieure de ladite planche de découpage (13) un élargissement ou fraisage en forme d'entonnoir (16) dudit trou (15), ceci de manière à permettre à la broche au moment de transpercer le morceau de base de bien se centrer, et de pénétrer sans difficulté dans le trou (15), sur la face inférieure de ladite planche de découpage (13), dans le sens de la longueur, deux sillons de guidage (17) servent à la tige de blocage amovible (12) de bien se diriger lors d'un décalage de ladite planche de découpage (13) pour pénétrer dans les trous (11), sans difficulté, lesdits sillons (17) servent également à stabiliser ladite planche de découpage (13) au moment du chargement des victuailles dans le bac (28), ce blocage permet à l'utilisateur, s'il le désire, de manipuler ladite planche de découpage (13) avec son support de blocage (12) une fois le bac (28) chargé, et cela sans déséquilibrer ou déranger les victuailles empilées dans ledit bac (28).

9. Appareil manuel pour la préparation, le découpage calibré et l'embrochage de brochettes alimentaires selon la revendication 8 caractérisé par le fait que la tige amovible (12) est confectionnée de longueur suffisante pour que ses deux bouts puissent passer de part en part de l'appareil dans le sens de la longueur et venir se fixer au point désiré d'ancrage prévu sur les côtés (8) dudit bac (28).

10. Appareil manuel pour la préparation, le découpage calibré et l'embrochage de brochettes alimentaires selon la revendication 1 caractérisé par le fait que dans le cas où les broches sont métalliques, celles-ci comportent, à l'extrémité opposée de la pointe, un oeillet pour le maintien et la manipulation; dans ce cas le bloc de guidage supérieur comporte, au niveau des trous de guidage, non seulement un trou cylindrique pour le corps de la broche, mais une ou plusieurs fentes (30) permettant le passage de l'oeillet de ladite broche.

11. Appareil manuel pour la préparation, le découpage calibré et l'embrochage de brochettes alimentaires selon l'une quelconque des revendications 6, 7 ou 8 caractérisé par le fait que la planche de découpage réglable (13) en hauteur, par le bas ou le fond de l'appareil, peut être maintenue en place non pas par la tige de blocage (12) mais par des glissières ou cornières disposées sur les côtés (8) à différents niveaux.

12. Appareil manuel pour la préparation, le découpage calibré et l'embrochage de brochettes alimentaires selon la revendication 3 caractérisé par le fait que le bloc de guidage (18) comporte une collerette (19) qui positionne automatiquement, ledit bloc de guidage (18) perpendiculaire aux côtés (8) et parallèle à la planche de découpage (13), lesdits aliments sont donc tous alignés parfaitement ce qui permet un centrage automatique des pièces alimentaires sur la broche.

Fig.1

Fig. 2

**Fig. 3**

Fig.4

Fig.5

Fig. 6

Fig. 7

0120170

**Fig.8**

Fig.9

## Coupe AA

_Fig. 11._

## Coupe BB

_Fig. 10_

Fig.12